# EUROPEAN PATENT SPECIFICATION

(11) **EP 1 584 729 B1**
(45) Date of publication and mention of the grant of the patent: **05.05.2010**
(21) Application number: 05005802.3
(22) Date of filing: 17.03.2005
(51) Int. Cl.: D06F 25/00, D06F 58/24

(54) **Washing-drying machine**
Waschtrockner
machine lave-linge séchante

(30) Priority: 09.04.2004 KR 2004024492
(43) Date of publication of application: 12.10.2005
(73) Proprietor: LG Electronics, Inc., Seoul (KR)
(72) Inventor: Hong, Sang Wook, Mapo-gu Seoul (KR); Jeon, Si Moon, Seocho-gu Seoul (KR)
(74) Representative: Rupprecht, Kay

(56) References cited:
- EP-A- 1 302 586
- WO-A-93/17169
- DE-A1- 19 615 823
- FR-A- 2 711 153

## Description

### CROSS-REFERENCE TO RELATED APPLICATION

This application claims the benefit of Korean Application No. P2004-24492 filed on April 9, 2004.

### BACKGROUND OF THE INVENTION

### Field of the Invention

The present invention relates to a drying device for a washing machine and to a washing machine including such a drying device according to the preambles of claims 1 and 10. Such a drying device and such a washing machine are known from FR-A-2 711 153.

### Discussion of the Related Art

The washing machine, an apparatus for removing dirt from laundry by using action of detergent and water, is one of typical home appliances. The washing machine performs, not only washing, but also drying of washed laundry.

The washing machine heats air and blows the air to a tub, and discharges air from the tub to an outside of the washing machine, to dry the laundry.

Because it is required that the washing machine keeps supplying heated air to the tub, much energy is consumed for heating the air. Moreover, since the washing machine discharges the heated air from the tub to the outside of the washing machine, the washing machine wastes energy.

### SUMMARY OF THE INVENTION

Accordingly, the present invention is directed to a washing machine that substantially obviates one or more problems due to limitations and disadvantages of the related art.

An object of the present invention is to provide a washing machine for circulating heated air within a cabinet, for drying laundry faster.

Another object of the present invention is to provide a washing machine, in which cooling water held on a bottom of a tub is circulated, for preventing waste of the cooling water.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a drying device for a washing machine as defined in claim 1 is provided.

Preferably, the duct includes a condensing duct having one end connected to the tub for receiving the air from the inside of the tub, and one side connected to the water supply device, and a drying duct connected to the condensing duct and the tub, for supplying dried air passed through the condensing duct to the tub, having the heater mounted therein.

Preferably, the fan is provided to a portion the drying duct is connected to the condensing duct.

The cooling water circulating device preferably includes a drain pump connected to the bottom of the tub, the drain pump having one side connected to a drain hose for draining water from the tub to an outside of the cabinet through the drain hose, a circulating hose having one side connected to the drain hose, and the other side connected to the water supply device or the duct, and a valve at a connection portion of the drain hose and the circulating hose, for opening/closing the drain hose, or the circulating hose.

Preferably, the cooling water circulating device includes a circulating pump connected to the bottom of the tub, for pumping the cooling water from the tub, and a circulating hose having one side connected to the pump, and the other side connected to the water supply device or the duct, for guiding the cooling water from the circulating pump to the duct.

Preferably, the circulating hose is extended to a position higher than a point where the circulating hose is connected to the water supply device, or the duct, and bent downward therefrom before the circulating hose is connected to the water supply device, or the duct, for preventing reverse flow of the cooling water.

water.

The cooling water circulating device preferably further includes a cooling fan for blowing air to an outside circumferential surface of the circulating hose for cooling the cooling water.

Preferably, The drying device further includes a temperature sensor at the bottom of the tub, for measuring a temperature of the cooling water.

Preferably, the cooling water is circulated, or drained according to a measurement result of the temperature sensor.

In another aspect of the present invention, a washing machine is provided as defined in claim 10.

The duct preferably includes a condensing duct having one end connected to the tub for receiving the air from the inside of the tub, and one side connected to the water supply device, and a drying duct connected to the condensing duct and the tub, for supplying dried air passed through the condensing duct to the tub, having the heater mounted therein.

Preferably, the fan is provided to a portion the drying duct is connected to the condensing duct.

Preferably, the cooling water circulating device includes a circulating hose having one side connected to the drain hose, and the other side connected to the water supply device or the duct, and a valve at a connection portion of the drain hose and the circulating hose, for opening/closing the drain hose, or the circulating hose.

Preferably, the circulating hose is extended to a position higher than a point where the circulating hose is connected to the water supply device, or the duct, and bent downward therefrom before the circulating hose is connected to the water supply device, or the duct, for preventing reverse flow of the cooling water.

The cooling water circulating device preferably further includes a cooling fan for blowing air to an outside circumferential surface of the circulating hose for cooling the cooling water.

Preferably, the washing machine further includes a temperature sensor at the bottom of the tub, for measuring a temperature of the cooling water.

The cooling water is preferably circulated, or drained according to a measurement result of the temperature sensor.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG 1 illustrates a front view of a conventional washing machine;

FIG. 2 illustrates a side view of a washing machine in accordance with a first preferred embodiment of the present invention;

FIG 3 illustrates a side view of a washing machine in accordance with a second preferred embodiment of the present invention;

FIG. 4 illustrates a side view of a washing machine in accordance with a third preferred embodiment of the present invention; and

FIG. 5 illustrates a side view of a washing machine in accordance with a fourth preferred embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

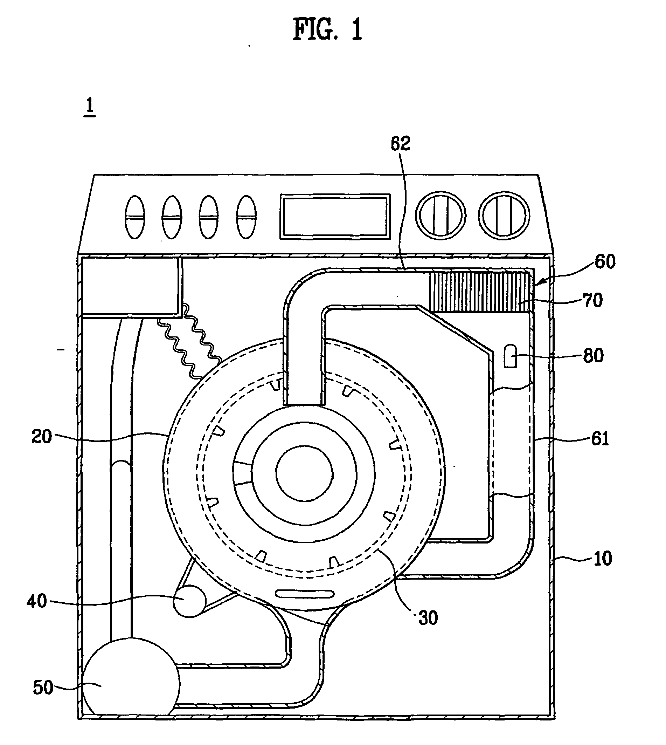

A conventional washing machine will be described with reference to FIG 1, which is useful for understanding the present invention.

Referring to FIG. 1, the washing machine 1 includes a cabinet 10 forming an exterior of the washing machine 1 having a door mounted on a front thereof, a tub 20 mounted in the cabinet 10, a drum 30 rotatably mounted in the tub 20, a motor 40 for rotating the drum 30, and a drain pump 50 for draining the washing water from the tub 20.

In addition to this, for drying laundry in the tub 20, in the washing machine, there is a duct 60 having opposite ends connected to the tub 20. The duct 60 includes a drying duct 62 connected to an upper portion of a front of the tub, and a condensing duct 61 connected to a lower portion of a side of the tub.

In the duct 60, there is a fan 70 for circulating air in the tub 20, and in the condensing duct 61, there is a water supply device 80 for supplying cooling water for condensing moisture in the air in the tub 20.

The cooling water supplied to the condensing duct through the water supply device 80 is held on the bottom of the tub 20, and drained to an outside of the cabinet 10 by the drain pump 50.

However, the conventional washing machine 1 has the following problems. Since the washing machine discharges used cooling water to the outside of the cabinet 10, the washing machine always has fresh cooling water supplied thereto by the water supply device 80. Therefore, in order to condense moisture in the air inside of the tub 20, the washing machine wastes a large amount of cooling water inefficiently, resulting to waste energy and resources.

In order to solve the problems of the conventional embodiment, the present invention suggests first, to fourth embodiments, as follows.

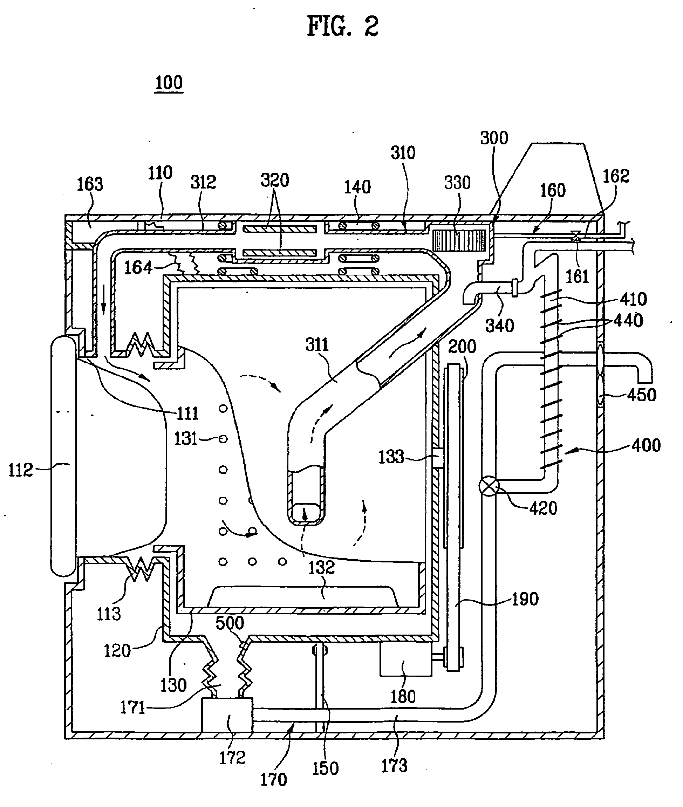

The first embodiment of the present invention will be described with reference to FIG 2. The washing machine 100 of the present invention includes a cabinet 110 which forms an exterior of the washing machine 100. There is a tub 120 suspended in the cabinet 110. For this, a top of the tub 120 is connected to a spring 140 secured to the cabinet 110, an underside of the tub 120 is connected to a damper 150 hinge coupled to a bottom of the cabinet 110. The spring 140 and the damper 150 not only suspend the tub 120 from the cabinet 110, but also attenuate vibration applied to the tub 120 during operation of the washing machine 100.

There is a drum 130 rotatably mounted in the tub 120. The drum 130 will be described in more detail.

The drum 130 has a plurality of pass through holes 131 in an outside circumferential surface, and a plurality of tumbling ribs 132 on an inside circumferential surface. Therefore, water supplied to the tub 120 can move between the drum 130 and the tub 120 through the pass through holes 131. The washing water in the drum 130 is lifted by the tumbling ribs 132 and falls down during rotation of the drum 130. According to this, a large amount of friction, and impact energy can be obtained at the time the laundry drops by the tumbling ribs 132.

In a front of the cabinet 110, there is an opening 111 for putting/taking the laundry into/out of the drum 130, and there is a door 112 for opening/closing the opening 111. Between the opening 111 of the cabinet 110 and the tub 120, there is a gasket 113 for preventing water and laundry held in the drum 130 and the tub 120 from leaking.

In the meantime, for supplying water to the tub 120, a water supply device 160 is provided in the cabinet 110. The water supply device 160 includes a water supply valve 161, a water supply hose 162, a detergent box 163, and a water supply bellows 164. The water supply valve opens/cuts off a flow passage of water supplied from an outside of the washing machine, the water supply hose 162 connects the water supply valve 161 and the detergent box 163. The water supply bellows 164 connects the detergent box 163 and the tub 120. If the water supply valve 161 is opened, water is supplied to the tub 120 via the water supply hose 162, the detergent box 163, and the water supply bellows 164. In this instance, the detergent stored in the detergent box 163 is supplied to the water as required.

Moreover, in order to drain water from the tub 120 to an outside of the cabinet 110, there is a draining device provided in the cabinet 110. The draining device includes a drain bellows 171, a drain pump 172, and a drain hose 173. The drain bellows 171 connects the tub 120 and the drain pump 172. The drain hose 173 has one end connected to the drain pump 172, and the other end in communication with an outside of the cabinet 110. Therefore, upon putting the drain pump 172 into operation, the water is discharged from the tub 120 to the outside of the cabinet 110 via the drain bellows 171, the drain pump 172, and the drain hose 173.

In the meantime, for rotating the drum 130, there is a motor 180 in the cabinet 110, in more detail, under the tub 120. There is a pulley 200 and a power transmission member for transmission of rotating force from the motor 180 to the drum 130. For providing the rotating force from the motor 180 to the drum 130, the pulley 200 is coupled to a shaft 133 extended toward a back side of the drum 130, and connected to the motor 180 with the power transmission member. The power transmission member is a belt 190.

For drying the laundry in the tub 120, the washing machine 100 has a drying device 300 provided thereto. The drying device 300 includes a duct 310, a fan 330, a water supply device 340, a heater 320, and a cooling water circulating device 400.

The duct 310 has opposite ends connected to the tub 120 for supplying the air from an inside of the tub 120 to the tub 120 again after air is passed through the duct 310. In more detail, the duct 310 has one end connected to an upper portion of a front of the tub 120, and the other end connected to a lower portion of a side of the tub 120. The duct 310 includes a condensing duct 311, and a drying duct 312.

The condensing duct 311 has one end connected to the tub 120, more specifically, to a lower portion of a side of the tub 120, for receiving air from the tub 120. The condensing duct 311 condenses moisture in the tub 120, and removes the moisture from the air introduced into the condensing duct 311.

The drying duct 312 has one end connected to the condensing duct 311, for receiving the air dried in the condensing duct 311. The drying duct 312 has the other end connected to the tub 120, more specifically, an upper portion of a front of the tub 120, to supply the dried air from the condensing duct 311 to the tub 120.

In the meantime, for circulating the air from the tub 120 through the duct 310, the duct 310 is provided with a fan 330. The fan draws air from the tub 120, and discharges to an inside of the tub 120. In more detail, the fan 330 draws air from the tub 120 through the condensing duct 311, and discharges to the tub 120 through the drying duct 312, again. The fan 330 is provided to a portion at which the drying duct 312 and the condensing duct 311 are connected.

The water supply device 340 is provided to one side of the duct 310, and supplies cooling water to the duct 310 for condensing moisture in the air passing through an inside of the tub 310. In more detail, the water supply device 340 is provided to an upper portion of the condensing duct 311.

In the meantime, the heater 320 is provided in the duct 310, more specifically, in the drying duct 312. The heater 320 heats the air dried in the condensing duct 311.

That is, the air in the tub 120 is drawn into the condensing duct 311 by the fan 330, and has the moisture removed therefrom in the condensing duct 311, and is introduced into the drying duct 312 via the fan 330. The air introduced into the duct 312 is heated by the heater 320, and discharged to the tub 120, again.

In the meantime, the cooling water from the water supply device 340 condenses the moisture in the air drawn into the condensing duct 311, and is held at the bottom of the tub 120 through the condensing duct 311.

In order to supply, and reuse the cooling water held at the bottom of the tub 120, the cooling water circulating device 400 is provided. The cooling water circulating device 400 supplies the cooling water from the bottom of the tub 120 to the duct 310 again, for circulating the cooling water.

The cooling water circulating device 400 may be mounted on an inside of the cabinet 110, or on an inside of case mounted on an outside of the cabinet 110.

The cooling water circulating device 400 includes a pump, a circulating hose 410, and a valve 420. The pump supplies the cooling water from the bottom of the tub 120 to the duct 310. The washing machine 100 in accordance with a first preferred embodiment of the present invention is not provided with separate pump, but the drain pump 172 is used for supplying the cooling water from the bottom of the tub 120 to the water supply device 340.

The circulating hose 410 has one end connected to the drain hose 173, and the other end connected to the water supply device 340, for guiding the cooling water from the drain pump 172 to the water supply device 340.

The valve 420 is mounted to a portion the circulating hose 410 is connected to the drain hose 173. The valve 420 opens/closes the circulating hose 410, or the drain hose 173, for supplying the cooling water to the water supply device 340, or the outside of the cabinet 110.

Moreover, in order to prevent the cooling water supplied from the water supply device 340 from flowing in a reverse direction toward the circulating hose 410, the circulating hose 410 is extended to a position higher than a point where the circulating hose 410 is connected to the water supply device 340, and bent downward therefrom before the circulating hose 410 is connected to the water supply device 340.

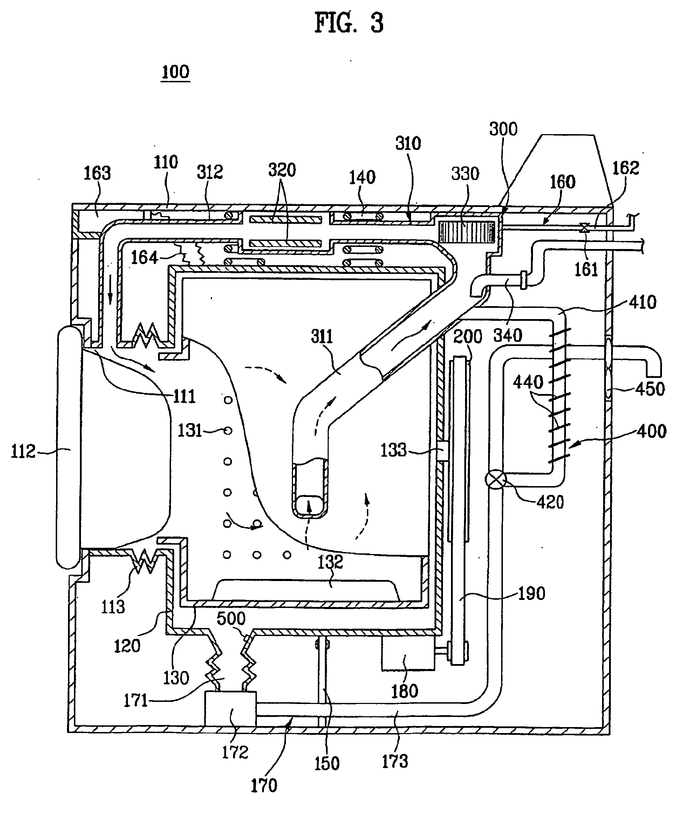

A second embodiment of the present invention will be described with reference to FIG. 3. The washing machine 100 in accordance with a second preferred embodiment of the present invention includes a cabinet 110, a tub 120, a drum 130, and a drying device 300. The drying device 300 includes a duct 310, a fan 330, a water supply device 340, a heater 320, and a cooling water circulating device 400. The cooling water circulating device 400 includes a pump, a circulating hose 410, and a valve 420.

In description of the second embodiment of the present invention, repetitive description of parts identical to the first embodiment of the present invention will be omitted.

That is, in the second embodiment of the present invention, the circulating hose 410 has one end connected to the drain hose 173, and the other side connected to the duct 310. In more detail, the circulating hose 410 is connected to an upper portion of the condensing duct 311, for guiding the cooling water from the drain pump 172 to the duct 310.

The valve 420 is mounted to a portion the circulating hose 410 is connected to the drain hose 173. The valve 420 opens/closes the circulating hose 410, or the drain hose 173, for supplying the cooling water to the duct 310, or an outside of the cabinet 110.

Moreover, in order to prevent the cooling water supplied from the water supply device 340 from flowing in a reverse direction to the duct 310 guided by the circulating hose 410, the circulating hose 410 is extended to a position higher than a point where the circulating hose 410 is connected to the duct 310, and bent downward therefrom before the circulating hose 410 is connected to the duct 310.

In the meantime, used cooling water in the first, or second embodiment having condensed the moisture in the air at the duct 310 has a temperature higher than a temperature of the cooling water supplied to the duct 310 from the water supply device 340.

The used cooling water can not condense moisture in the air at the duct 310 even if the used cooling water is supplied to the water supply device 340 or the duct 310 by the cooling water circulating device 400.

Therefore, the washing machine of the first, or second embodiment has a plurality of fins 440 projected from an outside circumferential surface of the cooling water circulating device 400, more particularly, from an outside circumferential surface of the circulating hose 410, for increasing a heat dissipation area. In this case, the plurality of fins 440 enable efficient heat dissipation from the cooling water flowing through the circulating hose 410. Accordingly, the cooling water can be supplied to the water supply device 340 or the duct 310 at a low temperature.

For blowing air toward an outside circumferential surface of the circulating hose 410, to drop a temperature of the cooling water flowing through the circulating hose 410, a cooling fan 450 is provided.

In the meantime, there is a temperature sensor at the bottom of the tub 120, in more detail, at a predetermined position of a portion the cooling water is to be held, for measuring a temperature of the cooling water. The valve 420 is selectively opened/closed according to a temperature of the cooling water measured at the temperature sensor, for draining the cooling water to an outside of the cabinet 110, or guiding to the circulating hose 410 for circulation.

The operation of the washing machine 100 in accordance with the first, or second preferred embodiment of the present invention will be described.

Power is applied to the heater 320 in the drying duct 312, and the fan 330 is put into operation, for producing heated air. Then, the heated air is guided to the tub 120 by the drying duct 312.

The air introduced into the tub 120 heats the laundry, to vaporize moisture in the laundry, and carries the moisture into the condensing duct 311.

In this instance, the water supply device 340 supplies cooling water to the condensing duct 311, to condense the moisture in the air introduced into the condensing duct 311. Then, the cooling water is held at the bottom of the tub 120 via the condensing duct 311, together with condensed water.

Then, the drain pump 172 pumps the cooling water. In this instance, the temperature sensor at the bottom of the tub 120 or at the drain bellows 171 measures a temperature of the cooling water held at the bottom of the tub 120. If the temperature measured at the temperature sensor is higher than a predetermined temperature, the valve 420 opens the drain hose 173, and closes the circulating hose 410, for draining the cooling water out of the cabinet 110. If the temperature measured at the temperature sensor is lower than a predetermined temperature, the valve 420 opens the circulating hose 410, and closes drain hose 173, for circulating the cooling water to the water supply device 340. In this instance, the cooling water flowing through the circulating hose 410 is involved in temperature drop by the plurality of fins 440 and the cooling fan 450, and, thereafter, supplied to the water supply device 340 or the duct 310.

In the meantime, circulation of the cooling water will be described in more detail.

The cooling water is supplied to the duct 310 through the water supply device 340, and condenses moisture in the air at the duct 310. Then, the cooling water is introduced into the tub 120 from the duct 310, and held at the bottom of the tub 120.

The drain pump 172 pumps the cooling water from the bottom of the tub 120 to the drain hose 173. The circulating hose 410, having one end connected to the drain hose 173, and the other end connected to the water supply device 340, guides the cooling water to the water supply device 340, or the duct 310.

Because the circulating hose 410 is extended to a position higher than a point where the circulating hose 410 is connected to the water supply device 340, or the duct 310, and bent downward therefrom before the circulating hose 410 is connected to the water supply device 340, or the duct 310, flow of the cooling water in a reverse direction is prevented.

In the meantime, the valve 420 opens/closes the drain hose 173, or the circulating hose 410, to drain the cooling water pumped by the drain pump 172, or guide the cooling water to the duct 310.

In this instance, the plurality of fins 440 on the outside circumferential surface of the circulating hose 410 cools down a temperature of the cooling water flowing through the circulating hose 410. Moreover, the cooling fan 450 blows air toward the outside circumferential surface of the circulating hose 410 to cool down a temperature of the cooling water flowing through the circulating hose 410.

The temperature sensor is provided to a portion the cooling water is to be held, i.e., at the bottom of the tub 120 or at the drain bellows 171 for measuring a temperature of the cooling water. According to a measurement result of a cooling water temperature, the washing machine controls the valve 420 for circulating the cooling water to the duct 310 or to the water supply device 340, or drains the cooling water out of the cabinet 110.

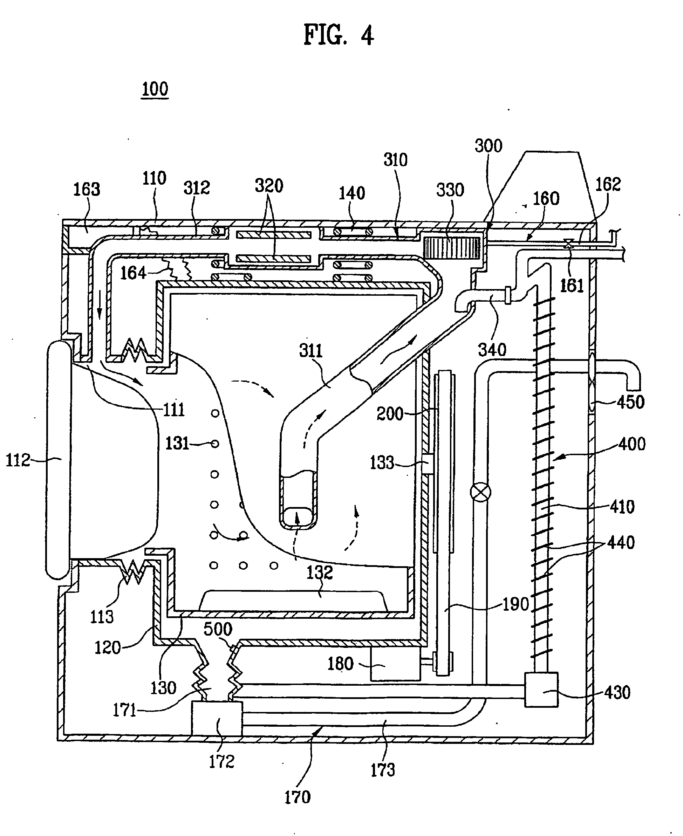

A third preferred embodiment of the present invention will be described with reference to FIG. 4. The washing machine 100 in accordance with a third preferred embodiment of the present invention includes a cabinet 110, a tub 120, a drum 130, and a drying device 300. The drying device 300 includes a duct 310, a fan 330, a water supply device 340, a heater 320, and a cooling water circulating device 400. The cooling water circulating device 400 includes a pump, and a circulating hose 410.

In description of the third embodiment of the present invention, repetitive description of parts identical to the first embodiment of the present invention will be omitted.

That is, in the third embodiment of the present invention, the pump supplies the cooling water from the bottom of the tub 120 to the duct 310. Besides the drain pump 172, the washing machine 100 in accordance with a third preferred embodiment of the present invention includes a circulating pump 430 separately for pumping the cooling water from the bottom of the tub 120.

The circulating pump 430 is connected to a portion where the cooling water is held, i.e., the bottom of the tub 120 or the drain bellows 171, for pumping the cooling water. The circulating hose 410 has one end connected to the circulating pump 430, and the other end connected to the water supply device 340, for guiding the cooling water from the circulating pump 430 to the water supply device 340.

Moreover, in order to prevent the cooling water supplied from the water supply device 340 from flowing in a reverse direction to the circulating hose 410, the circulating hose 410 is extended to a position higher than a point where the circulating hose 410 is connected to the water supply device 340, and bent downward therefrom before the circulating hose 410 is connected to the water supply device 340.

In the meantime, for cooling down used cooling water, there are a plurality of fins 440 projected from an outside circumferential surface of the cooling water circulating device 400, more particularly, from an outside circumferential surface of the circulating hose 410, for increasing a heat dissipation area. In this case, the plurality of fms 440 enable efficient heat dissipation from the cooling water flowing through the circulating hose 410. Accordingly, the cooling water can be supplied to the water supply device 340 at a low temperature.

For blowing air toward an outside circumferential surface of the circulating hose 410, to drop a temperature of the cooling water flowing through the circulating hose 410, a cooling fan 450 is provided.

In the meantime, there is a temperature sensor at the bottom of the tub 120, in more detail, at a predetermined position of a portion at which the cooling water is to be held, for measuring a temperature of the cooling water. The circulating pump 430 is operated according to a temperature of the cooling water measured at the temperature sensor, for supplying the cooling water to the water supply device 340, or the drain pump 172 is operated for draining the cooling water to an outside of the cabinet 110.

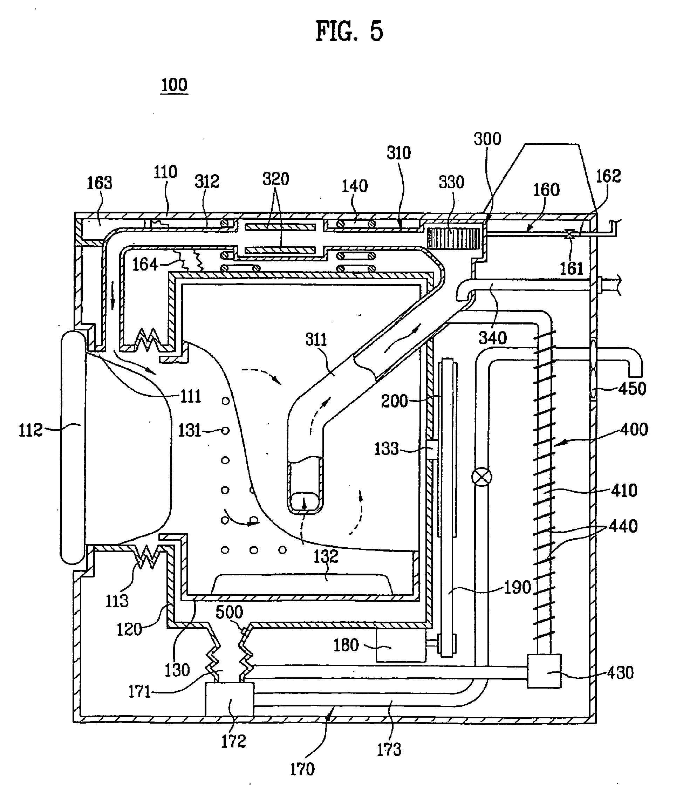

A fourth preferred embodiment of the present invention will be described with reference to FIG 5. The washing machine 100 in accordance with a fourth preferred embodiment of the present invention includes a cabinet 110, a tub 120, a drum 130, and a drying device 300. The drying device 300 includes a duct 310, a fan 330, a water supply device 340, a heater 320, and a cooling water circulating device 400. The cooling water circulating device 400 includes a pump, and a circulating hose 410.

In description of the fourth embodiment of the present invention, repetitive description of parts identical to the first embodiment of the present invention will be omitted.

That is, in the fourth embodiment of the present invention, the pump supplies the cooling water from the bottom of the tub 120 to the duct 310. Besides the drain pump 172, the washing machine 100 in accordance with a fourth preferred embodiment of the present invention includes a circulating pump 430 separately for pumping the cooling water from the bottom of the tub 120.

The circulating pump 430 is connected to a portion where the cooling water is held, i.e., the bottom of the tub 120 or the drain bellows 171, for pumping the cooling water. The circulating hose 410 has one end connected to the circulating pump 430, and the other end connected to the duct 310. In more detail, the circulating hose 410 is connected to an upper portion of the condensing duct 311. Therefore, the circulating hose 410 guides the cooling water from the drain pump 172 to the duct 310.

Moreover, in order to prevent the cooling water supplied from the water supply device 340 from flowing in a reverse direction to the circulating hose 410, the circulating hose 410 is extended to a position higher than a point where the circulating hose 410 is connected to the duct 310, and bent downward therefrom before the circulating hose 410 is connected to the duct 310.

In the meantime, for cooling down used cooling water, there are a plurality of fins 440 projected from an outside circumferential surface of the cooling water circulating device 400, more particularly, from an outside circumferential surface of the circulating hose 410, for increasing a heat dissipation area. In this case, the plurality of fins 440 enable efficient heat dissipation from the cooling water flowing through the circulating hose 410. Accordingly, the cooling water can be supplied to the water supply device 340 at a low temperature.

For blowing air toward an outside circumferential surface of the circulating hose 410, to drop a temperature of the cooling water flowing through the circulating hose 410, a cooling fan 450 is provided.

In the meantime, there is a temperature sensor at the bottom of the tub 120, in more detail, at a predetermined position of a portion at which the cooling water is to be held, for measuring a temperature of the cooling water. The circulating pump 430 is operated according to a temperature of the cooling water measured at the temperature sensor, for supplying the cooling water to the water supply device 340, or the drain pump 172 is operated for draining the cooling water to an outside of the cabinet 110.

The operation of the washing machine 100 in accordance with the third, or fourth preferred embodiment of the present invention will be described.

Power is applied to the heater 320 in the drying duct 312, and the fan 330 is put into operation, for producing heated air. Then, the heated air is guided to the tub 120 by the drying duct 312.

The air introduced into the tub 120 heats the laundry, to vaporize moisture in the laundry, and carries the moisture into the condensing duct 311.

In this instance, the water supply device 340 supplies cooling water to the condensing duct 311, to condense the moisture in the air introduced into the condensing duct 311. Then, the cooling water is held at the bottom of the tub 120 via the condensing duct 311, together with condensed water.

Then, the drain pump 172 pumps the cooling water. In this instance, the temperature sensor at the bottom of the tub 120 or at the drain bellows 171 measures a temperature of the cooling water held at the bottom of the tub 120. If the temperature measured at the temperature sensor is higher than a predetermined temperature, the drain pump 172 is operated, for draining the cooling water out of the cabinet 110. If the temperature measured at the temperature sensor is lower than a predetermined temperature, the circulating pump 430 is operated, circulating the cooling water to the water supply device 340. In this instance, the cooling water flowing through the circulating hose 410 is cooled down by the plurality of fins 440 and the cooling fan 450, and, thereafter, supplied to the water supply device 340 or the duct 310.

In the meantime, circulation of the cooling water will be described in more detail.

The cooling water is supplied to the duct 310 through the water supply device 340, and condenses moisture in the air at the duct 310. Then, the cooling water is introduced into the tub 120 from the duct 310, and held at the bottom of the tub 120.

The circulating pump 430 pumps the cooling water from the bottom of the tub 120 to the circulating hose 410. Then, the circulating hose 410 guides the cooling water to the water supply device 340, or the duct 310.

In this instance, because the circulating hose 410 is extended to a position higher than a point where the circulating hose 410 is connected to the water supply device 340, or the duct 310, and bent downward therefrom before the circulating hose 410 is connected to the water supply device 340, or the duct 310, flow of the cooling water in a reverse direction is prevented.

The plurality of fins 440 on the outside circumferential surface of the circulating hose 410 cool down a temperature of the cooling water flowing through the circulating hose 410. Moreover, the cooling fan 450 blows air toward the outside circumferential surface of the circulating hose 410 to cool down a temperature of the cooling water flowing through the circulating hose 410. Moreover, the temperature sensor is provided to a portion the cooling water is to be held, i.e., at the bottom of the tub 120 or at the drain bellows 171 for measuring a temperature of the cooling water. According to a measurement result of a cooling water temperature, the circulating pump 430 is operated, to drain the cooking water out of the cabinet 110.

As has been described, the washing machine of the present invention circulates the cooling water selectively, for reusing the cooling water, to reduce an amount of the cooling water used for condensing.

The plurality of cooling fins drops a temperature of the circulating cooling water, thereby improving a condensing efficiency in the duct.

It will be apparent to those skilled in the art that various modifications and variations can be made in the present invention without departing from the scope of the invention as defined in the appended claims. Thus, it is intended that the present invention covers the modifications and variations of this invention provided they come within the scope of the appended claims and their equivalents.

## Claims

1. A drying device for a washing machine (100) comprising:
a duct (310) having opposite ends connected to a tub (120) of the washing machine (100) such that air in the tub (120) passes through the duct (310), and is supplied to the tub (120) again;
a fan (330) in the duct (310) for drawing air from an inside of the tub (120), and discharging to the inside of the tub;
a water supply device (340) connected to the duct (310), for supplying cooling water to the inside of the duct to condense moisture in the air passing through the inside of the duct (310);
a heater (320) in the duct (310), for heating the air passing through the duct; and
a cooling water circulating device (400) for supplying cooling water held at a bottom of the tub (120) after passed through the duct (310) to an inside of the duct, again,
the cooling water circulating device (400) comprises:
a circulating hose (410) configured to guide the cooling water from the tub (120) to the water suppl device (340) or the duct (310); **characterized in that** the cooling water circulating device (400) further comprises: a valve (420) configured to be selectively opened/closed according to a temperature of the cooling water; and
a plurality of fins (440) provided on an outside surface of the circulating hose (410) in order to dissipate heat of the cooling water.

2. The drying device as claimed in claim 1, wherein the duct (310) includes:
a condensing duct (311) having one end connected to the tub (120) for receiving the air from the inside of the tub, and one side connected to the water supply device (340); and
a drying duct (312) connected to the condensing duct (311) and the tub (120), for supplying dried air passed through the condensing duct (311) to the tub (120), having the heater (320) mounted therein.

3. The drying device as claimed in claim 2, wherein the fan (330) is provided to a portion the drying duct (312) is connected to the condensing duct (311).

4. The drying device as claimed in claim 1, wherein the cooling water circulating device (400) further comprises:
a drain pump (172) connected to the bottom of the tub (120), the drain pump (172) having one side connected to a drain hose (173) for draining water from the tub (120) to an outside of the cabinet (110) through the drain hose (173), wherein
the circulating hose (410) has one side connected to the drain hose (173), and the other side connected to the water supply device (340) or the duct (310), and
the valve (420) at a connection portion of the drain hose (173) and the circulating hose (410).

5. The drying device as claimed in claim 1, wherein the cooling water circulating device (400) further comprises:
a circulating pump (430) connected to the bottom of the tub (120), for pumping the cooling water from the tub wherein
the circulating hose (410) has one side connected to the circulating pump (430), and the other side connected to the water supply device (340) or the duct (310).

6. The drying device as claimed in claim 4 or 5, wherein the circulating hose (410) is extended to a position higher than a point where the circulating hose is connected to the water supply device (340), or the duct (310), and bent downward therefrom before the circulating hose (410) is connected to the water supply device (340), or the duct (310), for preventing reverse flow of the cooling water.

7. The drying device as claimed in claim 4 or 5, wherein the cooling water circulating device (400) further includes a cooling fan (450) for blowing air to an outside circumferential surface of the circulating hose (410) for cooling the cooling water.

8. The drying device as claimed in claim 1, further comprising a temperature sensor at the bottom of the tub (120), for measuring a temperature of the cooling water.

9. The drying device as claimed in claim 8, wherein the cooling water is circulated, or drained according to a measurement result of the temperature sensor.

10. A washing machine comprising:
a cabinet (110);
a tub (120) in the cabinet (110);
a duct (310) having opposite ends connected to the tub (120) of the washing machine (100), for circulating air from the tub (120) to an outside of the tub, and removing moisture from the air in the tub (120);
a water supplying device (340) connected to the duct (310), for supplying cooling water to the duct;
a drain device including a drain pump (172) for draining water from an inside of the tub (120) to an outside of the cabinet (110), and a drain hose (173) connected to the drain pump (172), for guiding the water to the outside of the cabinet (110); and
a cooling water circulating device (400) having one end connected to the water supply device (340), or the duct (310), and the other end connected to the drain hose (173), for supplying the cooling water from a bottom of the tub (120) to the duct (310) again,
the cooling water circulating device (400) comprises:
a circulating hose (410) configured to guide the cooling water from the tub (120) to the water supply device (340) or the duct (310); **characterized in that** the cooling water circulating device (400) further comprises:
a valve (420) configured to be selectively opened/closed according to a temperature of the cooling water; and
a plurality of fins (440) provided on an outside surface of the circulating hose (410) in order to cool the cooling water.

11. The washing machine as claimed in claim 10, wherein the duct includes; a condensing duct (311) having one end connected to the tub (120) for receiving the air from the inside of the tub, and one side connected to the water supply device (340); and
a drying duct (312) connected to the condensing duct (311) and the tub (120), for supplying dried air passed through the condensing duct to the tub, having the heater (320) mounted therein.

12. The washing machine as claimed in claim 11, wherein the fan is provided to a portion the drying duct is connected to the condensing duct.

13. The washing machine as claimed in claim 10, wherein the circulating hose (410) has one side connected to the drain hose (173), and the other side connected to the water supply device (340) or the duct (310), wherein the valve (420) is provided at a connection portion of the drain hose (173) and the circulating hose (410), for opening/closing the drain hose (173), or the circulating hose (410).

14. The washing machine as claimed in claim 13, wherein the circulating hose (410) is extended to a position higher than a point where the circulating hose (410) is connected to the water supply device (340), or the duct (310), and bent downward therefrom before the circulating hose (410) is connected to the water supply device (340), or the duct (310), for preventing reverse flow of the cooling water.

15. The washing machine as claimed in claim 13, wherein the cooling water circulating device (400) further includes a cooling fan (450) for blowing air to an outside circumferential surface of the circulating hose (410) for cooling the cooling water.

16. The washing machine as claimed in claim 13, further comprising a temperature sensor at the bottom of the tub (120), for measuring a temperature of the cooling water.

17. The washing machine as claimed in claim 16, wherein the cooling water is circulated, or drained according to a measurement result of the temperature sensor.

## Patentansprüche

1. Trocknungsvorrichtung für eine Waschmaschine (100), aufweisend:
ein Rohr (310), dessen entgegen gesetzte Enden mit einer Wanne (120) der Waschmaschine (100) so verbunden sind, dass Luft in der Wanne (120) durch das Rohr (310) strömt und wieder der Wanne (120) zugeführt wird;
ein Gebläse (330) im Rohr (310) zum Abziehen von Luft aus dem Innern der Wanne (120) und zum wieder Abgeben in das Innere der Wanne;
eine Wasserzufuhrvorrichtung (340), welche mit dem Rohr (310) verbunden ist, um dem Inneren des Rohres Kühlwasser zuzuführen, um Feuchtigkeit in der Luft zu kondensieren, welche durch das Innere des Rohres (310) strömt; eine Heizvorrichtung (320) im Rohr (310), um die Luft zu erhitzen, welche durch das Rohr strömt; und
eine Kühlwasserzirkulationsvorrichtung (400) zur Zufuhr von Kühlwasser, welches am Boden der Wanne (120) gehalten wird, nachdem es durch das Rohr (310) wieder in ein Inneres des Rohres geströmt ist,
wobei die Kühlwasserzirkulationsvorrichtung (400) aufweist:
eine Zirkulationsleitung (410), welche so ausgelegt ist, dass sie das Kühlwasser von der Wanne (120) zur Wasserzufuhrvorrichtung (340) oder dem Rohr (310) leitet;
**dadurch gekennzeichnet, dass** die Kühlwasserzirkulationsvorrichtung (400) ferner aufweist:
ein Ventil (420), das so ausgelegt ist, dass es wahlweise geöffnet/geschlossen wird entsprechend einer Temperatur des Kühlwassers; und
eine Vielzahl von Rippen (440), welche an einer Außenfläche der Zirkulationsleitung (410) vorgesehen sind, um die Wärme des Kühlwassers abzuleiten.

2. Trocknungsvorrichtung nach Anspruch 1, wobei das Rohr (310) aufweist:
eine Kondensleitung (311), deren eines Ende mit der Wanne (120) verbunden ist, um die Luft aus dem Inneren der Wanne aufzunehmen, und deren andere Seite mit der Wasserzufuhrvorrichtung (340) verbunden ist; und
eine Trocknungsleitung (312), welche mit der Kondensleitung (311) und der Wanne (120) verbunden ist, um getrocknete Luft, welche durch die Kondensleitung (311) geströmt ist, der Wanne (120) zuzuführen, und welche die Heizvorrichtung (320) darin montiert hat.

3. Trocknungsvorrichtung nach Anspruch 2, wobei das Gebläse (330) an einem Teil der Trocknungsleitung (312) vorgesehen ist, welcher mit der Kondensleitung (311) verbunden ist.

4. Trocknungsvorrichtung nach Anspruch 1, wobei die Kühlwasserzirkulationsvorrichtung (400) ferner aufweist:
eine Ablaufpumpe (172), welche mit dem Boden der Wanne (120) verbunden ist, wobei eine Seite der Ablaufpumpe (172) mit einer Ablaufleitung (173) zum Ableiten von Wasser aus der Wanne (120) zu einer Außenseite des Gehäuses (110) durch die Ablaufleitung (173) verbunden ist, wobei eine Seite der Zirkulationsleitung (410) mit der Ablaufleitung (173) verbunden ist und
die andere Seite mit der Wasserzufuhrvorrichtung (340) oder dem Rohr (310) verbunden ist, und
das Ventil (420) an einem Verbindungsteil der Ablaufleitung (173) und der Zirkulationsleitung (410).

5. Trocknungsvorrichtung nach Anspruch 1, wobei die Kühlwasserzirkulationsvorrichtung (400) ferner aufweist:
eine Zirkulationspumpe (430), welche mit dem Boden der Wanne (120) verbunden ist, um das Kühlwasser aus der Wanne zu pumpen, wobei
eine Seite der Zirkulationsleitung (410) mit der Zirkulationspumpe (430) und
die andere Seite mit der Wasserzufuhrvorrichtung (340) oder dem Rohr (310) verbunden ist.

6. Trocknungsvorrichtung nach Anspruch 4 oder 5, wobei die Zirkulationsleitung (410) bis zu einer Stelle hinauf verläuft, welche höher ist als ein Punkt, an welchem die Zirkulationsleitung mit der Wasserzufuhrvorrichtung (340) oder dem Rohr (310) verbunden ist, und davon abwärts gebogen wird, bevor die Zirkulationsleitung (410) mit der Wasserzufuhrvorrichtung (340) oder dem Rohr (310) verbunden wird, um einen Rückfluss des Kühlwassers zu verhindern.

7. Trocknungsvorrichtung nach Anspruch 4 oder 5, wobei die Kühlwasserzirkulationsvorrichtung (400) ferner ein Kühlgebläse (450) aufweist, um Luft zu einer äußeren Umfangsfläche der Zirkulationsleitung (410) zu blasen, um das Kühlwasser zu kühlen.

8. Trocknungsvorrichtung nach Anspruch 1, ferner aufweisend einen Temperatursensor am Boden der Wanne (120), um eine Temperatur des Kühlwassers zu messen.

9. Trocknungsvorrichtung nach Anspruch 8, wobei das Kühlwasser entsprechend eines Messergebnisses des Temperatursensors zirkuliert oder abgeleitet wird.

10. Waschmaschine, aufweisend,
ein Gehäuse (110);
eine Wanne (120) im Gehäuse (110);
ein Rohr (310), dessen entgegen gesetzte Enden mit der Wanne (120) der Waschmaschine (100) verbunden sind, um Luft aus der Wanne (120) zu einem Äußeren der Wanne zu zirkulieren und um Feuchtigkeit aus der Luft in der Wanne (120) zu entfernen;
eine Wasserzufuhrvorrichtung (340), welche mit dem Rohr (310) verbunden ist, um dem Rohr Kühlwasser zuzuführen;
eine Ablaufvorrichtung mit einer Ablaufpumpe (172) zum Ableiten von Wasser aus einem Innern der Wanne (120) zu einer Außenseite des Gehäuses (110), und mit einer Ablaufleitung (173), welche mit der Ablaufpumpe (172) verbunden ist, um das Wasser zur Außenseite des Gehäuses (110) zu leiten; und
eine Kühlwasserzirkulationsvorrichtung (400), deren eines Ende mit der Wasserzufuhrvorrichtung (340) oder dem Rohr (310) verbunden ist, und deren anderes Ende mit der Ablaufleitung (173) verbunden ist, um das Kühlwasser von einem Boden der Wanne (120) wieder dem Rohr (310) zuzuführen,
wobei die Kühlwasserzirkulationsvorrichtung (400) aufweist:
eine Zirkulationsleitung (410), welche so ausgelegt ist, dass sie das Kühlwasser von der Wanne (120) zur Wasserzufuhrvorrichtung (340) oder dem Rohr (310) leitet;
**dadurch gekennzeichnet, dass** die Kühlwasserzirkulationsvorrichtung (400) ferner aufweist,
ein Ventil (420), das so ausgelegt ist, dass es wahlweise geöffnet/geschlossen wird entsprechend einer Temperatur des Kühlwassers; und
eine Vielzahl von Rippen (440), welche an einer Außenfläche der Zirkulationsleitung (410) vorgesehen sind, um das Kühlwasser zu kühlen.

11. Waschmaschine nach Anspruch 10, wobei das Rohr (310) aufweist:
eine Kondensleitung (311), deren eines Ende mit der Wanne (120) verbunden ist, um die Luft aus dem Inneren der Wanne aufzunehmen, und deren andere Seite mit der Wasserzufuhrvorrichtung (340) verbunden ist; und
eine Trocknungsleitung (312), welche mit der Kondensleitung (311) und der Wanne (120) verbunden ist, um getrocknete Luft, welche durch die Kondensleitung (311) geströmt ist, der Wanne (120) zuzuführen, und welche die Heizvorrichtung (320) darin montiert hat.

12. Waschmaschine nach Anspruch 11, wobei das Gebläse an einem Teil vorgesehen ist, an welchem die Trocknungsleitung mit der Kondensleitung verbunden ist.

13. Waschmaschine nach Anspruch 10, wobei eine Seite der Zirkulationsleitung (410) mit der Ablaufleitung (173) verbunden ist und die andere Seite mit der Wasserzufuhrvorrichtung (340) oder dem Rohr (310) verbunden ist, wobei das Ventil (420) an einem Verbindungsteil der Ablaufleitung (173) und der Zirkulationsleitung (410) vorgesehen ist, um die Ablaufleitung (173) oder die Zirkulationsleitung (410) zu öffnen/schließen.

14. Waschmaschine nach Anspruch 13, wobei die Zirkulationsleitung (410) bis zu einer Stelle hinauf verläuft, welche höher ist als ein Punkt, an welchem die Zirkulationsleitung (410) mit der Wasserzufuhrvorrichtung (340) oder dem Rohr (310) verbunden ist, und davon abwärts gebogen wird, bevor die Zirkulationsleitung (410) mit der Wasserzufuhrvorrichtung (340) oder der Leitung (310) verbunden wird, um einen Rückfluss des Kühlwassers zu verhindern.

15. Waschmaschine nach Anspruch 13, wobei die Kühlwasserzirkulationsvorrichtung (400) ferner ein Kühlgebläse (450) aufweist, um Luft zu einer äußeren Umfangsfläche der Zirkulationsleitung (410) zu blasen, um das Kühlwasser zu kühlen.

16. Waschmaschine nach Anspruch 13, ferner aufweisend einen Temperatursensor am Boden der Wanne (120), um eine Temperatur des Kühlwassers zu messen.

17. Waschmaschine nach Anspruch 16, wobei das Kühlwasser entsprechend eines Messergebnisses des Temperatursensors zirkuliert oder abgeleitet wird.

## Revendications

1. Dispositif de séchage pour une machine à laver (100), comprenant :
un conduit (310) dont les extrémités opposées sont reliées à une cuve (120) de la machine à laver (100) de telle sorte que l'air présent dans la cuve (120) passe dans le conduit (310) pour revenir ensuite à la cuve (120) ;
un ventilateur (330) dans le conduit (310), pour aspirer de l'air à l'intérieur de la cuve (120) et le renvoyer dans la cuve ;
un dispositif (340) d'alimentation en eau, relié au conduit (310), pour fournir de l'eau de refroidissement à l'intérieur du conduit afin de condenser l'humidité de l'air passant à l'intérieur du conduit (310) ;
un dispositif de chauffage (320) dans le conduit (310), pour chauffer l'air passant dans le conduit;
et un dispositif (400) de circulation d'eau de refroidissement, pour réalimenter à l'intérieur du conduit l'eau de refroidissement qui est maintenue sur le fond de la cuve (120) après être passée dans le conduit (310) ;
le dispositif (400) de circulation d'eau de refroidissement comprenant un flexible de circulation (410), conçu pour guider l'eau de refroidissement de la cuve (120) au dispositif (340) d'alimentation en eau ou au conduit (310) ;
**caractérisé en ce que** le dispositif (400) de circulation d'eau de refroidissement comprend en outre :
une soupape (420), conçue pour être sélectivement ouverte ou fermée en fonction d'une température de l'eau de refroidissement ;
et une pluralité d'ailettes (440), prévues sur la surface extérieure du flexible de circulation (410) afin de dissiper la chaleur de l'eau de refroidissement.

2. Dispositif de séchage selon la revendication 1, **caractérisé en ce que** le conduit (310) comprend :
un conduit de condensation (311), dont une extrémité est reliée à la cuve (120) pour recevoir de l'air depuis l'intérieur de la cuve, et dont un côté est relié au dispositif (340) d'alimentation en eau ;
et un conduit de séchage (312), relié au conduit de condensation (311) et à la cuve (120), à l'intérieur duquel se trouve le dispositif de chauffage (320) et qui est destiné à fournir à la cuve (120) l'air séché qui est passé dans le conduit de condensation (311).

3. Dispositif de séchage selon la revendication 2, **caractérisé en ce que** le ventilateur (330) est prévu sur une partie par laquelle le conduit de séchage (312) est relié au conduit de condensation (311).

4. Dispositif de séchage selon la revendication 1, **caractérisé en ce que** le dispositif (400) de circulation d'eau de refroidissement comprend en outre :
une pompe d'évacuation (172) reliée au fond de la cuve (120), la pompe d'évacuation (172) ayant un côté relié à un flexible d'évacuation (173) pour évacuer l'eau depuis la cuve (120) vers l'extérieur de la caisse (110) par l'intermédiaire du flexible d'évacuation (173),
sachant que le flexible de circulation (410) possède un côté relié au flexible d'évacuation (173) et l'autre côté relié au dispositif (340) d'alimentation en eau ou au conduit (310),
et que la soupape (420) se trouve sur une partie de liaison du flexible d'évacuation (173) et du flexible de circulation (410).

5. Dispositif de séchage selon la revendication 1, **caractérisé en ce que** le dispositif (400) de circulation d'eau de refroidissement comprend en outre :
une pompe de circulation (430) reliée au fond de la cuve (120), pour pomper l'eau de refroidissement depuis la cuve,
sachant que le flexible de circulation (410) possède un côté relié à la pompe de circulation (430), et l'autre côté relié au dispositif (340) d'alimentation en eau ou au conduit (310).

6. Dispositif de séchage selon la revendication 4 ou 5, **caractérisé en ce que** le flexible de circulation (410) s'étend jusqu'à un emplacement situé plus haut qu'un point où le flexible de circulation est relié au dispositif (340) d'alimentation en eau ou au conduit (310), et est incurvé vers le bas à partir de cet emplacement, avant que le flexible de circulation (410) soit relié au dispositif (340) d'alimentation en eau ou au conduit (310), afin d'empêcher le refoulement de l'eau de refroidissement.

7. Dispositif de séchage selon la revendication 4 ou 5, **caractérisé en ce que** le dispositif (400) de circulation d'eau de refroidissement comprend en outre un ventilateur de refroidissement (450) pour insuffler de l'air sur la surface circonférentielle extérieure du flexible de circulation (410) afin de refroidir l'eau de refroidissement.

8. Dispositif de séchage selon la revendication 1, **caractérisé en ce qu'**il comprend en outre un capteur de température sur le fond de la cuve (120), pour mesurer la température de l'eau de refroidissement.

9. Dispositif de séchage selon la revendication 8, **caractérisé en ce qu'**on fait circuler ou on évacue l'eau de refroidissement en fonction d'un résultat de mesure du capteur de température.

10. Machine à laver comprenant :
une caisse (110) ;
une cuve (120) dans la caisse (110) ;
un conduit (310) dont les extrémités opposées sont reliées à la cuve (120) de la machine à laver (100), pour faire circuler de l'air de la cuve (120) vers l'extérieur de la cuve, et pour éliminer l'humidité de l'air présent dans la cuve (120) ;
un dispositif (340) d'alimentation en eau, relié au conduit (310), pour fournir de l'eau de refroidissement au conduit;
un dispositif d'évacuation comprenant une pompe d'évacuation (172) pour évacuer de l'eau depuis l'intérieur de la cuve (120) vers l'extérieur de la caisse (110), et un flexible d'évacuation (173) relié à la pompe d'évacuation (172), pour guider l'eau vers l'extérieur de la caisse (110) ;
et un dispositif (400) de circulation d'eau de refroidissement, dont une extrémité est reliée au dispositif (340) d'alimentation en eau ou au conduit (310), et dont l'autre extrémité est reliée au flexible d'évacuation (173), pour réalimenter dans le conduit (310) l'eau de refroidissement provenant d'un fond de la cuve (120) ;
le dispositif (400) de circulation d'eau de refroidissement comprenant un flexible de circulation (410), conçu pour guider l'eau de refroidissement de la cuve (120) au dispositif (340) d'alimentation en eau ou au conduit (310) ;
**caractérisée en ce que** le dispositif (400) de circulation d'eau de refroidissement comprend en outre :
une soupape (420), conçue pour être sélectivement ouverte ou fermée en fonction d'une température de l'eau de refroidissement ;
et une pluralité d'ailettes (440), prévues sur la surface extérieure du flexible de circulation (410) afin de refroidir l'eau de refroidissement.

11. Machine à laver selon la revendication 10, **caractérisée en ce que** le conduit comprend :
un conduit de condensation (311), dont une extrémité est reliée à la cuve (120) pour recevoir de l'air depuis l'intérieur de la cuve, et dont un côté est relié au dispositif (340) d'alimentation en eau ;
et un conduit de séchage (312), relié au conduit de condensation (311) et à la cuve (120), à l'intérieur duquel se trouve le dispositif de chauffage (320) et qui est destiné à fournir à la cuve l'air séché qui est passé dans le conduit de condensation.

12. Machine à laver selon la revendication 11, **caractérisée en ce que** le ventilateur est prévu sur une partie par laquelle le conduit de séchage est relié au conduit de condensation.

13. Machine à laver selon la revendication 10, **caractérisée en ce que** le flexible de circulation (410) possède un côté relié au flexible d'évacuation (173) et l'autre côté relié au dispositif (340) d'alimentation en eau ou au conduit (310), et **en ce que** la soupape (420) se trouve sur une partie de liaison du flexible d'évacuation (173) et du flexible de circulation (410), afin d'ouvrir/fermer le flexible d'évacuation (173) ou le flexible de circulation (410).

14. Machine à laver selon la revendication 13, **caractérisée en ce que** le flexible de circulation (410) s'étend jusqu'à un emplacement situé plus haut qu'un point où le flexible de circulation (410) est relié au dispositif (340) d'alimentation en eau ou au conduit (310), et est incurvé vers le bas à partir de cet emplacement, avant que le flexible de circulation (410) soit relié au dispositif (340) d'alimentation en eau ou au conduit (310), afin d'empêcher le refoulement de l'eau de refroidissement.

15. Machine à laver selon la revendication 13, **caractérisée en ce que** le dispositif (400) de circulation d'eau de refroidissement comprend en outre un ventilateur de refroidissement (450) pour insuffler de l'air sur la surface circonférentielle extérieure du flexible de circulation (410) afin de refroidir l'eau de refroidissement.

16. Machine à laver selon la revendication 13, **caractérisée en ce qu'**elle comprend en outre un capteur de température sur le fond de la cuve (120), pour mesurer la température de l'eau de refroidissement.

17. Machine à laver selon la revendication 16, **caractérisée en ce qu'**on fait circuler ou on évacue l'eau de refroidissement en fonction d'un résultat de mesure du capteur de température.
